# EUROPÄISCHE PATENTSCHRIFT

(11) **EP 2 987 813 B1**
(45) Veröffentlichungstag und Bekanntmachung des Hinweises auf die Patenterteilung: **26.12.2018**
(21) Anmeldenummer: 15178975.7
(22) Anmeldetag: 30.07.2015
(51) Int. Cl.: C08F 299/00, B60C 1/00, C08C 19/00, C08C 19/44, C08L 19/00

(54) **SCHWEFELVERNETZBARE KAUTSCHUKMISCHUNG UND FAHRZEUGREIFEN**
SULPHUR LINKABLE NATURAL RUBBER MIXTURE AND VEHICLE TYRE
MÉLANGE DE CAOUTCHOUC RÉTICULABLE AU SOUFRE ET PNEU

(30) Priorität: 22.08.2014 DE 102014216710
(43) Veröffentlichungstag der Anmeldung: 24.02.2016
(73) Patentinhaber: Continental Reifen Deutschland GmbH, 30165 Hannover (DE)
(72) Erfinder: Weinreich, Hajo, 31552 Apelern (DE); Kuschel, Ana, 40219 Düsseldorf (DE); Craig, Aileen, 30900 Wedemark (DE)
(74) Vertreter: Finger, Karsten

(56) Entgegenhaltungen:
- WO-A1-2013/068270
- DE-B1- 1 520 548
- DE-T2- 69 206 445
- US-A1- 2010 252 156

## Beschreibung

Die Erfindung betrifft eine schwefelvernetzbare Kautschukmischung laut Anspruch 1 und einen Fahrzeugreifen laut Anspruch 5 der die schwefelvernetzbare Kautschukmischung in wenigstens einem Bauteil aufweist.

Fahrzeugreifen müssen verschiedenen Anforderungen im Straßenverkehr gerecht werden. Insbesondere die Verbesserung des Rollwiderstandsverhaltens im Zielkonflikt mit anderen Anforderungen ist im Fokus der Entwicklung.

Die EP 2060604 B1 offenbart hierzu eine Kautschukmischung enthaltend ein funktionalisiertes Polymer mit einem Gewichtsmittel des Molekulargewichts von 2000 bis 150000 g/mol, wobei das Polymer die funktionellen Gruppen synthesebedingt an den Polymerkettenenden trägt.

Allerdings sind derartige Polymere aufgrund der funktionellen Gruppen sehr reaktiv, sodass sich eine geringe Lagerungsbeständigkeit ergibt. In der Folge ergeben sich bei der Verwendung derartiger Polymere in Kautschukmischungen Schwankungen bei der Verarbeitbarkeit, insbesondere beim Mischen der Bestandteile, und damit hinsichtlich der resultierenden Eigenschaften der Kautschukmischung.

Die DE 1520548 B1 offenbart die Herstellung von verzweigten Polymeren, aber keine schwefelvernetzbare Kautschukmischung, die neben den verzweigten Polymeren noch einen Dienkautschuk mit einem vergleichsweise hohen Molekulargewicht enthält.

Die DE 69206445 T2 offenbart eine Kautschukmischung enthaltend eine Kombination aus sternförmig verzweigtem SBR und BR, die die Kautschukmatrix zu insgesamt 100 phr ausmachen. Alle sonstigen Bestandteile der sind Additive. Sowohl der SBR als auch der BR der DE 69206445 T2 weisen ein vergleichsweise hohes Molekulargewicht auf.

Der vorliegenden Erfindung liegt daher die Aufgabe zugrunde, eine schwefelvernetzbare Kautschukmischung enthaltend wenigstens ein auf Butadien basierendes funktionalisiertes Polymer mit einem Gewichtsmittel des Molekulargewichts gemäß GPC von 500 bis 45000 g/mol für Fahrzeugreifen bereitzustellen, die gegenüber dem Stand der Technik eine weitere Verbesserung hinsichtlich des Rollwiderstands-Verhaltens und Handling-Verhaltens aufweist und zudem eine verbesserte Verarbeitbarkeit aufweist, wobei ein konstantes Eigenschaftsprofil ohne Qualitätsschwankungen erzielt werden soll. Gleichzeitig sollen die übrigen Reifeneigenschaften wie die Beständigkeit gegenüber Rissbildung und Rissfortpflanzung, die Abriebresistenz sowie das Trocken- und Nassbremsverhalten sowie die Wintereigenschaften zumindest nicht signifikant negativ beeinträchtigt oder sogar zumindest teilweise verbessert werden.

Gelöst wird die Aufgabe durch die erfindungsgemäße schwefelvernetzbare Kautschukmischung enthaltend wenigstens einen Dienkautschuk mit einem Gewichtsmittel Mw des Molekulargewichts gemäß GPC von 100000 bis 5000000 g/mol aufweist, der ausgewählt ist aus der Gruppe bestehend aus natürlichem Polyisopren und synthetischem Polyisopren und Butadien-Kautschuk und Styrol-Butadien-Kautschuk, und wenigstens ein auf Butadien basierendes funktionalisiertes Polymer mit einem Gewichtsmittel Mw des Molekulargewichts gemäß GPC von 1000 bis 20000 g/mol, wobei die Kautschukmischung dadurch gekennzeichnet ist, dass das Polymer über wenigstens eine organische Gruppe enthaltend wenigstens eine funktionelle Gruppe verzweigt ist, sodass an die wenigstens eine organische Gruppe zwei oder mehr auf Butadien basierende Polymerketten angebunden sind.

Bevorzugte Erfindungen sind in Ansprüchen 2 bis 4 definiert.

Eine weitere Aufgabe, die der vorliegenden Erfindung zugrunde liegt, besteht darin einen Fahrzeugreifen bereitzustellen, der sich einfacher und mit konstanter Prozessführung herstellen lässt und einen geringeren (und damit verbesserten) Rollwiderstand und ein verbessertes Handling-Verhalten bei gleichen sonstigen Reifeneigenschaften aufweist. Insbesondere die Beständigkeit gegenüber Rissbildung und Rissfortpflanzung, die Abriebresistenz sowie das Trocken- und Nassbremsverhalten sowie die Wintereigenschaften sollen zumindest nicht signifikant negativ beeinträchtigt oder sogar zumindest teilweise verbessert werden.

Gelöst wird die Aufgabe dadurch, dass der Fahrzeugreifen in wenigstens einem Bauteil wenigstens ein Vulkanisat wenigstens einer schwefelvernetzbaren Kautschukmischung mit oben genannten Merkmalen aufweist. Bevorzugt weist der Fahrzeugreifen die Kautschukmischung wenigstens im Laufstreifen auf. Bei dem Laufstreifen kann es sich um einen Laufstreifen aus einer einzigen Schicht handeln oder um einen Laufstreifen mit einer Cap/Base-Konstruktion, wobei die erfindungsgemäße Kautschukmischung sowohl in der Cap als auch der Base des erfindungsgemäßen Fahrzeugreifens enthalten sein kann. Bevorzugt handelt es sich um einen Laufstreifen mit einer Cap/Base-Konstruktion, wobei die erfindungsgemäße Kautschukmischung wenigstens in der Cap des erfindungsgemäßen Fahrzeugreifens enthalten ist.

Unter "Cap" ist im Rahmen der vorliegenden Erfindung der mit der Fahrbahn in Berührung kommende Teil des Laufstreifens zu verstehen, der radial außen angeordnet ist (Laufstreifenoberteil oder Laufstreifencap).

Unter "Base" ist im Rahmen der vorliegenden Erfindung der Teil des Laufstreifens zu verstehen, der radial innen angeordnet ist, und somit im Fahrbetrieb nicht mit der Fahrbahn in Berührung kommt (Laufstreifenunterteil oder Laustreifenbase).

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für den erfindungsgemäßen Fahrzeugreifen, der die erfindungsgemäße Kautschukmischung in wenigstens einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen. Das erfindungsgemäß enthaltene Polymer mit einem Gewichtsmittel Mw des Molekulargewichts von 1000 bis 20000 g/mol geht daher nicht als Kautschuk in die hundert Teile der phr-Berechnung ein.

Erfindungswesentlich enthält die schwefelvernetzbare Kautschukmischung wenigstens ein auf Butadien basierendes funktionalisiertes Polymer mit einem Gewichtsmittel Mw des Molekulargewichts von 1000 bis 20000 g/mol, welches über wenigstens eine organische Gruppe enthaltend wenigstens eine funktionelle Gruppe verzweigt ist, sodass an die wenigstens eine organische Gruppe zwei oder mehr auf Butadien basierende Polymerketten angebunden sind.

Das angegebene Gewichtsmittel Mw des Molekulargewichts bezieht sich im Rahmen der vorliegenden Erfindung auf die Summe aller Polymerketten, die an eine organische Gruppe geknüpft sind, inklusive der verknüpfenden organischen Gruppe.

Die Bestimmung des Gewichtsmittels Mw des Molekulargewichtes der Polymere erfolgt mittels Gelpermeationschromatographie (GPC mit Tetrahydrofuran (THF) als Elutionsmittel bei 40 °C, kalibriert mit Polystyrol-Standard; Größenausschlußchromatographie; engl. SEC = size exclusion chromatography in Anlehnung an BS ISO 11344:2004).

Im Rahmen der vorliegenden Erfindung wird die Abkürzung Mw für das Gewichtsmittel des Molekulargewichts verwendet.

Erfindungsgemäß beträgt das Mw des auf Butadien basierenden funktionalisierten Polymers 1000 bis 20000 g/mol, ganz besonders bevorzugt 1500 bis 15000 g/mol. Insbesondere, wenn das Mw nicht mehr als 20000 g/mol beträgt, ergibt sich der oben beschriebene Vorteil bei einer gleichzeitig sehr guten Prozessierbarkeit, wie insbesondere Mischbarkeit, der erfindungsgemäßen Kautschukmischung. Das Polymer hat in dem Bereich von 1000 bis 20000 g/mol somit einen besonders weichmachenden Effekt.

Im Rahmen der vorliegenden Erfindung bedeutet "eine organische Gruppe enthaltend wenigstens eine funktionelle Gruppe" eine chemische Einheit, die 1 bis 20 Kohlenstoffatome als Gerüst enthält und zudem wenigstens eine funktionelle Gruppe trägt. Das Kohlenstoffgerüst kann lineare, verzweigte und/oder zyklische Abschnitte enthalten und z.B. ein Alkylrest sein oder ungesättigt sein und/oder aromatische Abschnitte enthalten.

Dadurch, dass zwei oder mehrere Polymerketten über eine organische Gruppe enthaltend wenigstens eine funktionelle Gruppe verknüpft sind, sind die funktionellen Gruppen weniger reaktiv. Hierdurch ergibt sich eine erhöhte Lagerungsstabilität der Polymere vor der Verwendung in der schwefelvernetzbaren Kautschukmischung. Die schwefelvernetzbare Kautschukmischung lässt sich somit mit konstanter Prozessführung herstellen, insbesondere mischen. Somit weist die erfindungsgemäße Kautschukmischung enthaltend das genannte Polymer einen verbesserten Rollwiderstand und verbesserte Handling-Indikatoren bei gleichzeitig konstanten Eigenschaften und somit einer erhöhten Qualität auf.

Durch die Verknüpfung mehrerer Polymerketten über eine organische Gruppe enthaltend wenigstens eine funktionelle Gruppe, ist die wenigstens eine funktionelle Gruppe somit nahezu in der Mitte des Makromoleküls angeordnet, wobei sie mittig angeordnet ist, wenn alle angebundenen Polymerketten die gleiche Zahl von Kohlenstoffatomen bezogen auf die längste lineare Kette aufweisen.

Bevorzugt ist die wenigstens eine funktionelle Gruppe ausgewählt aus der Gruppe bestehend aus Amin- und/oder Amid- und/oder Urethan- und/oder Harnstoff- und/oder Aminosiloxan- und/oder Siloxan- und/oder Silyl- und/oder Silan-Sulfid-und/oder Thiol- und/oder Hydroxy- und/oder Ethoxy- und/oder Epoxy- und/oder Carboxy-Gruppen und/oder Ester-Gruppen.

Hiermit ergeben sich, insbesondere in der Kombination mit Kieselsäure als Füllstoff, eine Verbesserung des Rollwiderstands-Verhaltens und des Handling-Verhaltens sowie gute Eigenschaften hinsichtlich der weiteren oben genannten Reifeneigenschaften.

Unter Silyl-Gruppe wird im Rahmen der vorliegenden Erfindung die Gruppierung

I) (R¹)₃Si-

verstanden.

Die an das Siliziumatom gebundenen Reste R¹ sind Alkoxy-Gruppen mit 1 bis 10 Kohlenstoffatomen, bevorzugt Methoxy- oder Ethoxygruppen, oder zyklische Dialkoxy-Gruppen mit 2 bis 10 Kohlenstoffatomen oder Cycloalkoxygruppen mit 4 bis 10 Kohlenstoffatomen oder Phenoxygruppen oder Arylgruppen mit 6 bis 20 Kohlenstoffatomen, bevorzugt Phenyl, oder Alkylgruppen mit 1 bis 10 Kohlenstoffatomen, bevorzugt Methyl- oder Ethylgruppen, oder Alkenylgruppen mit 2 bis 20 Kohlenstoffatomen oder Aralkylgruppen mit 7 bis 20 Kohlenstoffatomen oder Halogenide, bevorzugt Chloride (R¹ = Cl), und können innerhalb eines Moleküls gleich oder verschieden voneinander sein.

Es ist dabei auch denkbar, dass eine zyklische Dialkoxy-Gruppe (das Derivat eines Diols) so angebunden ist, dass es mit beiden Sauerstoffatomen an das Siliziumatom gebunden ist und somit als zwei angebundene Reste R¹ zählt, wobei der weitere Rest R¹ ausgewählt ist aus den oben genannten Möglichkeiten.

Bevorzugt handelt es sich bei R¹ jedoch um Alkoxy-Gruppen mit 1 bis 10 Kohlenstoffatomen, sodass das organische Silan bevorzugt wenigstens eine Trialkoxy-Silyl-Gruppe aufweist.

Hierbei sind Methoxy- und/oder Ethoxy-Gruppen bevorzugt. Besonders bevorzugt sind alle drei Reste R¹ gleich und Methoxy- und/oder Ethoxy-Gruppen und ganz besonders bevorzugt drei Ethoxy-Gruppen.

Das Polymer basiert auf Butadien Monomeren. Weiterhin können weitere Monomere, wie weitere konjugierte Diene oder vinylaromatische Monomere, wobei Styrol bevorzugt ist, im Polymer enthalten sein. Hierbei ist dem Fachmann klar, dass das Polymer dann formal Derivate dieser Monomere enthält, die wenigstens durch die Polymerisation chemisch verändert sind.

Die erfindungsgemäße Kautschukmischung ist schwefelvernetzbar. Hierzu enthält sie wenigstens einen Dienkautschuk, insbesondere für die Verwendung in Bauteilen von Fahrzeugreifen. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Die erfindungsgemäße Kautschukmischung enthält wenigstens einen Dienkautschuk mit einem Gewichtsmittel Mw des Molekulargewichts gemäß GPC von 100000 bis 5000000 g/mol, der ausgewählt ist aus der Gruppe bestehend aus natürlichem Polyisopren und synthetischem Polyisopren und Butadien-Kautschuk und Styrol-Butadien-Kautschuk.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch sterreospezifischen Polymerisation in Lösung mit Ziegler-Natta-Katalysatoren oder unter Verwendung von fein verteilten Lithiumalkylen erhalten werden. Zum anderen hnadelt es sich bei Naturkautschuk (NR) um ein solches cis-1,4 Polyisopren, der cis-1,4-Anteil im Naturkautschuk größer 900 Gew.-% ist.

Ferner ist auch ein Gemisch eines oder mehrerer natürlichen Polyisoprene mit einem oder mehreren synthetischen Polyisoprene denkbar.

Bei dem Styrol-Butadien-Kautschuk (Styrol-Butadien-Copolymer) kann es sich sowhl um lösungspolymerisierten Styrol-Butdaien (SSBGR) als auch um emulsions polymerisierten Styrol-Butadiene-Kautschuk (ESBR) handeln, wobie auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegden Erfindung synonym verwendet.Bevorzugt sind in jedem Fall Styrol-Butadien-Copolymer mit einem Mw von 100000 bis 600000 g/mol (einhuderttausend bis sechshunderttausend Gramm pro Mol).

Das oder die eingesetzte(n) Styrol-Butadien-Coplymere kann/können mit Modifizierung und Funktionlisierungen endgruppenmodifiziert und/oder entlang der Polymerketten funktionalisiert sein. Bei der Modifizierung kann es sich um solche mit

Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Butadien-Kautschuk (= BR, Polybutadien) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften der Kautschukmischung erzielt.
Das eingesetzte Polybutadien kann mit den oben beim Styrol-Butadien-Kautschuk genannten Modifizierungen und Funktionalisierungen endgruppenmodifiziert und/oder entlang der Polymerketten funktionalisiert sein.

Gemäß einer bevorzugten Weiterbildung der Erfindung enthält die Kautschukmischung wenigstens einen Styrol-Butadien-Kautschuk, bevorzugt in Mengen von 40 bis 100 phr, besonders bevorzugt 45 bis 80 phr.
Gemäß einer bevorzugten Weiterbildung der Erfindung enthält die Kautschukmischung wenigstens einen Styrol-Butadien-Kautschuk, der an den Polymerkettenenden und/oder entlang der Polymerketten (engl. "back bone functionalized") mit wenigstens einer der oben genannten Gruppen funktionalisiert ist. Besonders bevorzugt handelt es sich bei den funktionellen Gruppen um solche Gruppen, die an Kieselsäure anbinden können, wie insbesondere Hydroxy-Gruppen und/oder Ethoxy-Gruppen und/oder Epoxy-Gruppen und/oder Siloxan-Gruppen und/oder Aminosiloxan und/oder Carboxy-Gruppen und/oder Silan- Sulfid-Gruppen.

Gemäß einer bevorzugten Weiterbildung der Erfindung werden in der Kautschukmischung wenigstens zwei verschiedene Dienkautschuk-Typen eingesetzt.

Gemäß einer bevorzugten Weiterbildung der Erfindung enthält die Kautschukmischung 5 bis 35 phr wenigstens eines natürlichen Polyisoprens und/oder wenigstens eines synthetischen Polyisoprens, wobei wenigstens ein natürliches Polyisopren bevorzugt ist. Hierdurch ergibt sich eine besonders gute Verarbeitbarkeit der Kautschukmischung.

Zusätzlich kann die erfindungsgemäße Kautschukmischung weitere Dienkautschuke in vergleichsweise geringen Mengen, wie 0,1 bis 20 phr enthalten. Der weitere Dienkautschuk ist dabei ausgewählt aus der Gruppe enthaltend epoxidiertem Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-DienKautschuk und/oder Nitril-Kautschuk und/oder Chloropren-Kautschuk und/oder AcrylatKautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem Acrylnitrilbutadien-Kautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-DienKautschuk kommen bei der Herstellung von technischen Gummiartikeln, wie Gurte, Riemen und Schläuche, und/oder Schuhsohlen zum Einsatz.

Bevorzugt enthält die erfindungsgemäße Kautschukmischung jedoch keinen weiteren der genannten Dienkautschuke, d.h. 0 phr weitere der genannten Dienkautschuke. Mit einer derartigen Kautschukmischung werden besonders gute Eigenschaften hinsichtlich der Haltbarkeit sowie des Rollwiderstandsverhalten sowie der sonstigen physikalischen Eigenschaften erzielt, sodass diese besonders für die Anwendung im Fahrzeugreifen geeignet ist.

Die erfindungsgemäße Kautschukmischung enthält bevorzugt, insbesondere für die Anwendung im Fahrzeugreifen, wenigstens einen Füllstoff. Bevorzugt enthält sie 10 bis 300 phr, bevorzugt 30 bis 300 phr, wenigstens eines Füllstoffs, wobei die Gesamtmenge an allen enthaltenen Füllstoffen gemeint ist.
Mit einem derartigen Gesamtfüllstoffgehalt werden besonders gute Eigenschaften hinsichtlich des Rollwiderstandsverhalten sowie der sonstigen physikalischen Eigenschaften erzielt, sodass diese besonders für die Anwendung im Fahrzeugreifen geeignet ist. Zudem ergibt sich eine besonders gute Verarbeitbarkeit der Kautschukmischung, insbesondere im unvulkanisierten Zustand.

Hierbei kann es sich um alle dem Fachmann bekannten Füllstoffe handeln, wie Ruß, Kohlenstoffnanoröhrchen oder auch helle Füllstoffe, wie Kieselsäure, Alumosilicate, Schichtsilicate wie Kaolin, Calciumcarbonat (Kreide), Stärke, Magnesiumoxid, Titandioxid, oder Kautschukgele.
Zinkoxid zählt im Rahmen der vorliegenden Erfindung nicht zu den hellen Füllstoffen.

Gemäß einer bevorzugten Ausführungsform der Erfindung enthält die erfindungsgemäße schwefelvernetzbare Kautschukmischung 10 bis 150 phr wenigstens eines Rußes. Hiermit ergibt sich eine besonders gute Verbesserung des Rollwiderstandes bei gleichbleibenden sonstigen Reifeneigenschaften.

Gemäß einer bevorzugten Ausführungsform der Erfindung enthält die erfindungsgemäße schwefelvernetzbare Kautschukmischung 10 bis 200 phr wenigstens einer Kieselsäure.

Gemäß einer vorteilhaften Weiterbildung der Erfindung enthält die Kautschukmischung Ruß und Kieselsäure in Kombination miteinander, wobei der Gesamtfüllstoffgehalt 10 bis 300 phr beträgt.

Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.
Hiermit werden für die Anwendung im Fahrzeugreifen besonders gute
Rollwiderstandsindikatoren (Rückprallelastizität bei 70 °C) und Reißeigenschaften erzielt.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 115 bis 235 m²/g, und eine CTAB-Oberfläche (gemäß ASTM D 3765) von 30 bis 400 m²/g, bevorzugt von 30 bis 250 m²/g, besonders bevorzugt von 80 bis 250 m²/g und ganz besonders bevorzugt von 80 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Solvay), zum Einsatz kommen.

Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff denkbar.
Zinkoxid gehört im Rahmen der vorliegenden Erfindung nicht zu den Füllstoffen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden. Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.
Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.
Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Weiterhin ist es vorteilhaft, wenn die erfindungsgemäße Kautschukmischung wenigstens einen Weichmacher enthält, wobei die Gesamtmenge an Weichmacher bevorzugt 5 bis 100 phr beträgt. Hierdurch ergibt sich insbesondere in Kombination mit den oben genannten Bestandteilen eine besonders gute Prozessierbarkeit der Kautschukmischung, insbesondere der Extrudate vor der Vernetzung.
Insbesondere durch eine vergleichsweise hohe Menge an Weichmacher von 15 bis 100 phr, bevorzugt 20 bis 100 phr, besonders bevorzugt 20 bis 70 phr, ganz besonders bevorzugt 35 bis 60 phr, lässt sich die noch unvulkanisierte Kautschukmischung, insbesondere mit einem vergleichsweise hohen Füllstoffgehalt von 50 bis 300 phr, wie beispielsweise 100 bis 170 phr Kieselsäure, gut mischen, wodurch eine homogene Verteilung aller Bestandteile ermöglicht wird.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Faktisse oder Weichmacherharze oder Flüssig-Polymere, die nicht dem oben beschriebenen Polymer entsprechen und deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.
Der Weichmacher ist bevorzugt ausgewählt aus der Gruppe bestehend aus den oben genannten Weichmachern.
Mineralöle sind als Weichmacher besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z.B. Zinkethylhexanoat,
c) Wachse,
d) Harze, insbesondere Klebharze, bei denen es sich nicht um Weichmacherharze handelt,
e) Mastikationshilfsmittel, wie z. B. 2,2'-Dibenzamidodiphenyldisulfid (DBD) und
f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.
Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexylthiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.
Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.
Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, wie z.B. ein Vulkanisationsmittel der Formel A), sowie die oben genannten Systeme Vulkuren®, Duralink® und Perkalink® begrifflich als Vulkanisationsmittel zusammengefasst.

Der erfindungsgemäßen Kautschukmischung werden bei deren Herstellung bevorzugt wenigstens ein Vulkanisationsmittel ausgewählt aus der Gruppe enthaltend, besonders bevorzugt bestehend aus, Schwefel und/oder Schwefelspender und/oder Vulkanisationsbeschleuniger und/oder Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugreifen, herstellen.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Gemäß einer bevorzugten Weiterbildung der Erfindung werden bei der Herstellung der schwefelvernetzbaren Kautschukmischung mehrere Beschleuniger in der Fertigmischstufe zugegeben.
Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.
Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, wie dem Laufstreifen und/oder der Seitenwand und/oder in wenigstens einem inneren Bauteil.
Als Body-Mischung werden hierbei die Kautschukmischungen für die inneren Bauteile eines Reifen bezeichnet. Als innere Reifenbauteile werden im Wesentlichen Squeegee, Seitenwand, Innenseele (Innenschicht), Kernprofil, Gürtel, Schulter, Gürtelprofil, Karkasse, Wulstverstärker, Wulstprofil, Homprofil und Bandage bezeichnet.
Bevorzugt wird die erfindungsgemäße Kautschukmischung jedoch in Laufstreifen von Fahrzeugreifen verwendet, bevorzugt hierbei wenigstens in der Cap von Laufstreifen mit Cap/Base-Konstruktion.

Zur Verwendung in Fahrzeugreifen wird die Mischung als Fertigmischung vor der Vulkanisation bevorzugt in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der noch unvulkanisierten Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in der Tabelle 1 zusammengefasst sind, näher erläutert werden.
Die Vergleichsbeispiele sind mit V, die erfindungsgemäßen Beispiele sind mit E gekennzeichnet.
Die Mischungsherstellung erfolgte nach dem in der Kautschukindustrie üblichen Verfahren unter üblichen Bedingungen in zwei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der Grundmischstufe wurde bei 140 bis 180 °C gemischt.
Durch Zugabe des Vulkanisationssystems in der zweiten Stufe (Fertigmischstufe) wurde die Fertigmischung erzeugt, wobei bei 90 bis 120 °C gemischt wurde.

Aus sämtlichen Mischungen wurden Prüfkörper durch Vulkanisation unter Druck bei 160°C in 20 Minuten hergestellt und mit diesen Prüfkörpern für die Kautschukindustrie typische Materialeigenschaften mit den im Folgenden angegebenen Testverfahren ermittelt.
- Mooney-Viskosität (ML1+4), gemäß ASTM D1646 (Mooney-Einheiten abgekürzt M.E.)
- Shore-A-Härte bei Raumtemperatur (RT) und 70 °C gemäß DIN ISO 7619-1
- Rückprallelastizität bei 70 °Cgemäß DIN 53 512
- Bruchenergiedichte Bruchdehnung und dem Modul bei maximaler Dehnung gemäß DIN 53 504

Ferner wurden Reifentests durchgeführt, und zwar in den Vergleichsbeispielen mit den Vergleichsmischungen V1, V2 und V3 jeweils als Laufstreifencap und im erfindungsgemäßen Beispiel mit der Mischung E1 als Laufstreifencap. Folgende Testmethoden wurden angewandt:
- Handling-Verhalten: Subjektiver Test, Asphalt, trocken, subjektives Ranking (Ranking 1 ist am besten)
- Rollwiderstand: gemäß ISO 28580

Die ermittelten Werte des Rollwiderstandes wurden in Performance (Leistung) umgerechnet, wobei die Vergleichsmischung V1 auf 100 % Performance normiert wurde. Alle anderen Mischungsleistungen beziehen sich auf diese Vergleichsmischung V1. Hierbei bedeuten Werte < 100 % eine Verschlechterung in der Eigenschaften, während Werte > 100 % eine Verbesserung darstellen.

### Verwendete Substanzen

a) Naturkautschuk SMR10
b) SSBR: 5025-0, Fa. Lanxess
c) Kieselsäure Ultrasil® VN3, Fa. Evonik
d) Polymer A: Mw = Mw 6530 g/mol; Vinylgehalt = 55%,
   Triethoxysilanol-funktionalisiert am Kettenende,
   Viskosität bei 25 °C gemäß DIN/ISO 2901 = 26200 mPa·s
e) Polymer: Gemisch von Polymer A und B, jeweils 50 Gew.-%
f) Polymer B: Mw = 12880 g/mol, Vinyl-Gehalt = 55% ,
   Triethoxysilanol-funktionalisiert in der Kettenmitte (Dimer)
   Viskosität bei 25 °C gemäß DIN/ISO 2901 = 41500 mPa·s,
g) Öl: Weichmacher TDAE
h) Silan: TESPD
i) Zusatzstoffe: 2 phr ZnO, 1 phr Stearinsäure, 2 phr Ozonschutzwachs, 6 phr Alterungsschutzmittel (DTPD, 6PPD, TMQ), 6 phr Prozesshilfsmittel (Fettsäureester und Zinkseifen)
j) Beschleuniger: CBS, DPG

Ferner wurden die Viskositäten und die Tendenz zur Viskositätsänderung des Polymers A, des Gemisches aus A und B sowie des Polymers B (Beschreibungen siehe oben) bestimmt. Hierbei zeigt sich folgende Tendenz zur Viskositätsänderung:
Polymer A: hoch
Polymer A + B: mittel
Polymer B: keine

Zusammen mit den Ergebnissen der Tabelle 1 ist somit festzustellen, dass mit der erfindungsgemäßen Kautschukmischung enthaltend Polymer B, welches die funktionelle Gruppe aufgrund der Verknüpfung der Polymerketten in der Mitte trägt, eine verbesserte Prozessstabilität (verbesserte Verarbeitbarkeit aufgrund der nicht vorhandenen Viskositätsschwankungen des Polymers B) bei gleichem oder verbessertem Handling- und Rollwiderstandsverhalten erreicht wird.

**Tabelle 1**

| **Bestandteile** | **Einheit** | **V1** | **V2** | **V3** | **E1** |
|---|---|---|---|---|---|
| NR ^{a)} | phr | 25 | 25 | 25 | 25 |
| SSBR ^{b)} | phr | 75 | 75 | 75 | 75 |
| Ruß N339 | phr | 5 | 5 | 5 | 5 |
| Kieselsäure ^{c)} | phr | 95 | 95 | 95 | 95 |
| Polymer A ^{d)} | phr | - | 15 | - | - |
| Polymer ^{e)} | phr | - | - | 15 | - |
| Polymer B ^{f)} | phr | - | - | - | 15 |
| Öl ^{g)} | phr | 28 | 28 | 25 | 25 |
| Silan ^{h)} | phr | 7 | 7 | 7 | 7 |
| Zusatzstoffe ⁱ⁾ | phr | 17 | 17 | 17 | 17 |
| Beschleuniger ^{j)} | phr | 4,8 | 4,8 | 4,8 | 4,8 |
| Schwefel | phr | 0,7 | 0,7 | 0,7 | 0,7 |
| | | | | | |

| **Physikalische Eigenschaften von Laborproben** | | | | | |
|---|---|---|---|---|---|
| Viskosität | M.E. | 102 | 90 | 95 | 96 |
| Härte RT | Shore A | 67,5 | 68,5 | 68,2 | 67,6 |
| Härte 70 °C | Shore A | 59,6 | 64,2 | 63,1 | 62,2 |
| Rückpr. 70 °C | % | 50,8 | 54,8 | 55,9 | 55,5 |
| Bruchenergiedichte | J/cm³ | 35,6 | 35,3 | 36 | 40,9 |
| | | | | | |

| **Reifenergebnisse** | | | | | |
|---|---|---|---|---|---|
| Handling | Ranking | 1 | 4 | 3 | 2 |
| Rollwiderstand | % | 100 | 113 | 112 | 112 |

## Patentansprüche

1. Schwefelvernetzbare Kautschukmischung enthaltend wenigstens einen Dienkautschuk mit einem Gewichtsmittel Mw des Molekulargewichts gemäß GPC von 100000 bis 5000000 g/mol aufweist, der ausgewählt ist aus der Gruppe bestehend aus natürlichem Polyisopren und synthetischem Polyisopren und Butadien-Kautschuk und Styrol-Butadien-Kautschuk, und wenigstens ein auf Butadien basierendes funktionalisiertes Polymer mit einem Gewichtsmittel Mw des Molekulargewichts gemäß GPC von 1000 bis 20000 g/mol, **dadurch gekennzeichnet, dass** das Polymer über wenigstens eine organische Gruppe enthaltend wenigstens eine funktionelle Gruppe verzweigt ist, sodass an die wenigstens eine organische Gruppe zwei oder mehr auf Butadien basierende Polymerketten angebunden sind.

2. Schwefelvernetzbare Kautschukmischung nach Anspruch 1, **dadurch gekennzeichnet, dass** die wenigstens eine funktionelle Gruppe ausgewählt ist aus der Gruppe bestehend aus Amin- und/oder Amid- und/oder Urethan- und/oder Harnstoff- und/oder Aminosiloxan- und/oder Siloxan- und/oder Silyl- und/oder Silan-Sulfid- und/oder Thiol- und/oder Hydroxy- und/oder Ethoxy- und/oder Epoxy- und/oder Carboxy-Gruppen und/oder Ester-Gruppen.

3. Schwefelvernetzbare Kautschukmischung nach einem der vorherigen Ansprüche, **dadurch gekennzeichnet, dass** sie 10 bis 300 phr wenigstens eines Füllstoffs enthält.

4. Schwefelvernetzbare Kautschukmischung nach Anspruch 3, **dadurch gekennzeichnet, dass** sie 10 bis 200 phr wenigstens einer Kieselsäure enthält.

5. Fahrzeugreifen, **dadurch gekennzeichnet, dass** er in wenigstens einem Bauteil wenigstens ein Vulkanisat wenigstens einer schwefelvernetzbaren Kautschukmischung nach einem der Ansprüche 1 bis 4 aufweist.

## Claims

1. Sulfur-crosslinkable rubber mixture containing at least one diene rubber which has a weight-average molecular weight Mw according to GPC of 100 000 to 5000 000 g/mol and is selected from the group consisting of natural polyisoprene and synthetic polyisoprene and butadiene rubber and styrenebutadiene rubber and at least one butadiene-based functionalized polymer which has a weight-average molecular weight Mw according to GPC of 1000 to 20 000 g/mol, **characterized in that** the polymer is branched via at least one organic group containing at least one functional group, so that two or more butadiene-based polymer chains are bonded to the at least one organic group.

2. Sulfur-crosslinkable rubber mixture according to Claim 1, **characterized in that** the at least one functional group is selected from the group consisting of amine and/or amide and/or urethane and/or urea and/or aminosiloxane and/or siloxane and/or silyl and/or silane-sulfide and/or thiol and/or hydroxyl and/or ethoxy and/or epoxy and/or carboxyl and/or ester groups.

3. Sulfur-crosslinkable rubber mixture according to either of the preceding claims, **characterized in that** it contains 10 to 300 phr of at least one filler.

4. Sulfur-crosslinkable rubber mixture according to Claim 3, **characterized in that** it contains 10 to 200 phr of at least one silica.

5. Vehicle tyre, **characterized in that** it comprises in at least one component part at least one vulcanizate of at least one sulfur-crosslinkable rubber mixture according to any of Claims 1 to 4.

## Revendications

1. Mélange de caoutchouc réticulable au soufre contenant au moins un caoutchouc diénique ayant une moyenne en poids Mw du poids moléculaire par CPG de 100 000 à 5 000 000, qui est choisi dans le groupe constitué par le polyisoprène naturel et le polyisoprène synthétique et le caoutchouc de butadiène et le caoutchouc de styrène-butadiène, et au moins un polymère fonctionnalisé à base de butadiène ayant une moyenne en poids Mw du poids moléculaire par CPG de 1 000 à 20 000 g/mol, **caractérisé en ce que** le polymère est ramifié par au moins un groupe organique contenant au moins un groupe fonctionnel de telle sorte que deux chaînes polymères à base de butadiène ou plus soient reliées audit au moins un groupe organique.

2. Mélange de caoutchouc réticulable au soufre selon la revendication 1, **caractérisé en ce que** ledit au moins un groupe fonctionnel est choisi dans le groupe constitué par les groupes amine et/ou amide et/ou uréthane et/ou urée et/ou aminosiloxane et/ou siloxane et/ou silyle et/ou sulfure de silane et/ou thiol et/ou hydroxy et/ou éthoxy et/ou époxy et/ou carboxy et/ou les groupes ester.

3. Mélange de caoutchouc réticulable au soufre selon l'une quelconque des revendications précédentes, **caractérisé en ce qu'**il contient 10 à 300 pce d'au moins une charge.

4. Mélange de caoutchouc réticulable au soufre selon la revendication 3, **caractérisé en ce qu'**il contient 10 à 200 pce d'au moins une silice.

5. Pneu de véhicule, **caractérisé en ce qu'**il comprend dans au moins un composant au moins un vulcanisat d'au moins un mélange de caoutchouc réticulable au soufre selon l'une quelconque des revendications 1 à 4.
